# EUROPÄISCHE PATENTSCHRIFT

(11) **EP 1 371 538 B1**
(45) Veröffentlichungstag und Bekanntmachung des Hinweises auf die Patenterteilung: **16.02.2005**
(21) Anmeldenummer: 03011478.9
(22) Anmeldetag: 21.05.2003
(51) Int. Cl.: B60T 17/06, B60T 11/26

(54) **Mehrkammerdruckbehälter**
Multi-chamber pressure vessel
Réservoir multichambre pressurisé

(30) Priorität: 14.06.2002 DE 10226530
(43) Veröffentlichungstag der Anmeldung: 17.12.2003
(73) Patentinhaber: DaimlerChrysler AG, 70567 Stuttgart (DE)
(72) Erfinder: Vogel, Thomas, 76889 Schweigen-Rechtenbach (DE)

(56) Entgegenhaltungen:
- DE-A- 2 138 391
- DE-A- 4 029 931
- DE-A- 4 120 667

## Beschreibung

Die Erfindung betrifft einen Druckbehälter mit einer Behälterwand, mit stirnseitig an der Behälterwand druckdicht befestigten Abdeckungen und einem durch Behälterwand und Stirnseiten gebildeten Innenraum zur Aufnahme flüssiger und/oder gasförmiger Medien, wobei der Innenraum mehrere, durch Trennwände separierte, voneinander unabhängige Kammern aufweist.

Solche Druckbehälter werden beispielsweise bei pneumatisch betätigten Bremssystemen im Kraftfahrzeugbereich und hier insbesondere im Nutzfahrzeugbereich eingesetzt. Die Bremskreise werden dabei getrennt betätigt, wodurch mehrere unabhängige Druckkammern notwendig sind.

Die DE-OS-2138391 zeigt einen Behälter zur Aufnahme flüssiger oder gasförmiger Medien, in dessen Innenraum mehrere voneinander unabhängige Kammer angeordnet sind, die jeweils über eigene Anschlüsse verfügen. Die Kammern sind konzentrisch zu der Behälterlängsachse angeordnet. Die Trennung der einzelnen Kammern erfolgt durch in den Innenraum des Behälters eingebrachte konzentrische Rohre, die jeweils an den Stirnseiten des Druckbehälters befestigt werden.

Ausgehend von diesem Stand der Technik liegt der Erfindung die Aufgabe zugrunde, einen Druckbehälter so auszugestalten, dass dieser bei hoher Stabilität konstruktiv einfach ausgebildet ist.

Zur Lösung dieser Aufgabe wird bei einem gattungsgemäßen Druckbehälter vorgeschlagen, die Behälterwand und die Trennwände einstückig auszubilden.

Mit dieser Ausgestaltung ist eine zusätzliche Befestigung der Trennwände an dem Behälter nicht notwendig. Es werden Befestigungsmittel eingespart und es können auch keine durch die zusätzliche Befestigung bedingte Schwachstellen auftreten. Prinzipiell ist es auch günstig, die Zahl der einzelnen Komponenten zu reduzieren.

Gemäß einer vorteilhaften Weiterbildung sind die Kammern wabenförmig ausgebildet, was zu einer besonders hohen Stabilität des gesamten Druckbehälters führt.

Mit Vorteil grenzt jede der Kammern an die Abdeckungen der beiden Stirnseiten des Druckbehälters an. Damit erstrecken sich die Kammern entlang der Längsachse des Behälters und sind im Grundsatz von beiden Stirnseiten aus zugänglich.

Weiter ist es aus Gründen der Stabilität und der Einbaubarkeit sinnvoll, diesen mit einer weitgehend rechteckförmigen Querschnittsfläche auszubilden.

Um den Druckbehälter optimal nicht nur für getrennte Druckkreisläufe sondern auch für Druckkreisläufe mit unterschiedlichem Mediumsbedarf einsetzen zu können, weisen die Kammern unterschiedliche Volumina auf.

In einer besonders vorteilhaften Ausbildung des Druckbehälters ist eine Kammer konzentrisch zur Längsachse des Druckbehälters angeordnet. Die kreisförmige Wandung dieser Kammer ist mit den Trennwänden der anderen Kammern verbunden und erhöht damit die Stabilität des Druckbehälters insgesamt.

Besonders günstig ist es, wenn die Behälterwand und die mit dieser einstückigen Trennwände ein abgelängtes Aluminium-Strangprofil sind. Dies ermöglicht eine einfache und wenig aufwändige Herstellung des Grundmoduls.

Weiter mit Vorteil sind die Anschlüsse zur Befüllung und Entnahme der Medien an den stirnseitigen Abdeckungen angeordnet. Bohrungen oder sonstige Maßnahmen an dem Grundmodul zur Befüllung oder Entleeren der Kammern sind damit nicht notwendig.

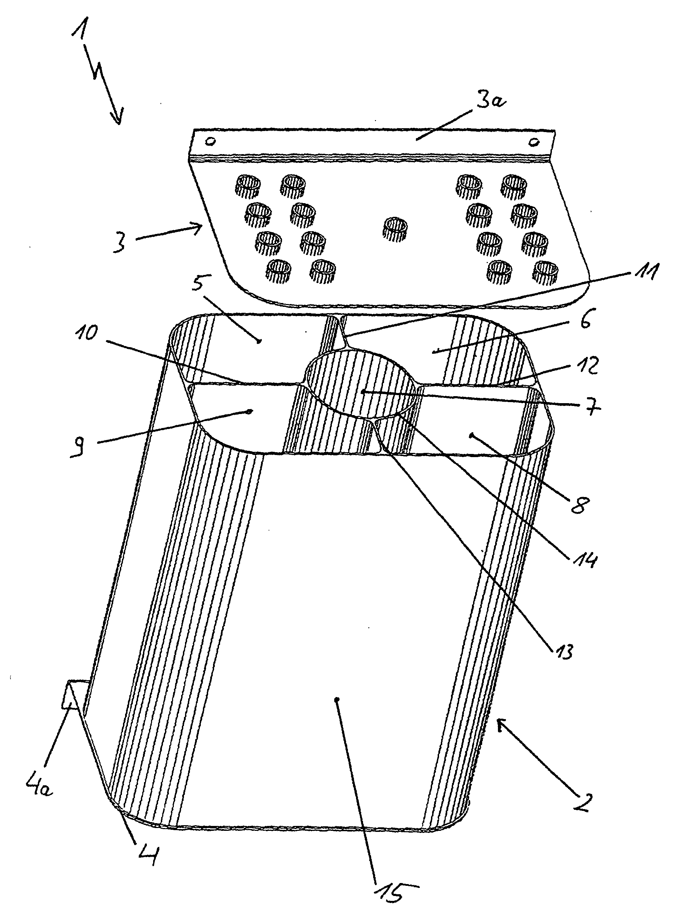

Weitere Vorteile und Merkmale der Erfindung können der nachfolgenden Beschreibung zu dem in der Zeichnung dargestellten Ausführungsbeispiel sowie den einzelnen Patentansprüchen entnommen werden.

In der Zeichnung zeigt die einzige Figur einen Druckbehälter in perspektivischer Darstellung.

Dieser erfindungsgemäß ausgebildete Druckbehälter 1 zur Speicherung von Druckluft beispielsweise zum Betrieb der pneumatischen Bremsanlage eines Kraftfahrzeugs besteht aus einem in Längsrichtung beidseitig offenen Grundmodul 2, das durch jeweils an einer der Stirnseiten befestigte Abdeckungen 3, 4 druckdicht verschlossen wird. In dem Ausführungsbeispiel ist die Abdeckung 3 abgehoben dargestellt, um den Blick in das Innere des Druckbehälters 1 freizugeben. An den stirnseitigen Abdeckungen 3, 4 sind Profile 3a, 4a zur Montage des Druckbehälters 1 an einem Kraftfahrzeug vorgesehen.

Innenseitig weist der Druckbehälter 1 fünf Kammern 5-9 zur Aufnahme der Druckluft auf. Die Kammern sind getrennt und voneinander unabhängig, so dass mit jeder einzelnen Kammer ein separater Druckkreislauf versorgt werden kann. Hierzu verfügt auch jede der Kammern über eigene Befüll- und Entnahmestutzen, die in die Abdeckungen integriert sind.

Zwischen den Kammern des Grundmoduls 2 und den Abdeckungen 3, 4 sind geeignete, nicht gezeigte Dichtmittel angeordnet.

Die einzelnen Kammern 5-9 sind durch Trennwände 10-14 gegeneinander abgeschottet, wobei die Kammern wabenförmig, also mit jeweils parallel verlaufenden Längsachsen angeordnet sind. Diese wabenförmige Anordnung der Kammer 5-9 erhöht die Gesamtfestigkeit des Grundmoduls 2 und macht den Druckbehälter 1 insgesamt stabiler gegen äußere Einwirkungen. Aus Gründen einer möglichst hohen Stabilität weist der Druckbehälter eine weitgehend rechteckförmige Querschnittsfläche auf, wobei die Eckkanten des Druckbehälters kreisbogenförmig mit großen Radien ausgebildet sind.

Innerhalb des Druckbehälters kommt es im Falle gleicher Drücke in den einzelnen Kammern zu einer Kompensation der Druckkräfte auf die Trennwände.

In dem Ausführungsbeispiel ist die Kammer 13 konzentrisch zu der Längsachse des Grundmoduls 2 und die jeweils gleich großen Kammern 10, 11, 12, 14 symmetrisch zu der Kammer 13 angeordnet. Für die Stabilität ist es dabei sehr günstig, wenn sich die Verlängerungen der jeweils fluchtenden Trennwände 10, 12 und 11, 14 in der Längsachse des Druckbehälters 1 schneiden.

Erfindungsgemäß ist das gesamte Grundmodul 2 bestehend aus der Behälterwand 15 und den Trennwänden 10-14 einstückig ausgebildet. Das Grundmodul 2 wird vor allem aus Gewichtsgründen als Strangprofil aus Aluminium hergestellt, das unter Berücksichtigung der gewünschten Volumina der Kammern abgelängt wurde. Dies ist ein einfaches und auch kostengünstiges Verfahren, Druckbehälter mit an die Anforderungen im Druckkreislauf angepassten Kammervolumina herzustellen.

Ein großer Vorteil der Einstückigkeit des Grundmoduls 2 liegt darin, dass die Trennwände nicht mit der Behälterwand 15 des Druckbehälters 1 verschweißt werden müssen, da insbesondere an Schweißnähten das Problem von Korrosion auftreten kann. Auch wird durch den Aufbau des Grundmoduls, der vor allem bei Anwendungen im Kraftfahrzeug nur begrenzt zur Verfügung stehende Bauraum optimal genutzt. Des weiteren werden Anzahl und Vielfalt der Teile reduziert.

Mit dem erfindungsgemäßen Druckbehälter können Schweißvorgänge auf die Befestigung der Abdeckungen 3, 4 an dem Grundmodul 2 beschränkt werden.

Die Anzahl der Trennwände und damit die Anzahl der Kammern ist allein durch das Stranggussverfahren limitiert und kann entsprechend an den Bedarf an unabhängigen Druckkreisläufe angepasst. Auch die Stärke der Behälterwand 15 und der Trennwände 10-14 wird bedarfsfallspezifisch entschieden.

## Patentansprüche

1. Druckbehälter (1) mit einer Behälterwand (15), mit stirnseitig an der Behälterwand (15) druckdicht befestigten Abdeckungen (3, 4) und einem durch Behälterwand (15) und Stirnseiten gebildeten Innenraum zur Aufnahme flüssiger und/oder gasförmiger Medien, wobei der Innenraum mehrere, durch Trennwände (10-14) separierte, voneinander unabhängige Kammern (5-9) aufweist,
**dadurch gekennzeichnet,**
**dass** die Behälterwand (15) und die Trennwände (10, 11, 12, 13, 14) als einstückiges Grundmodul (2) ausgebildet sind.

2. Druckbehälter nach Anspruch 1,
**dadurch gekennzeichnet,**
**dass** die Kammern (5, 6, 7, 8, 9) wabenförmig ausgebildet sind.

3. Druckbehälter nach Anspruch 2,
**dadurch gekennzeichnet,**
**dass** jede der Kammern (5, 6, 7, 8, 9) an die Abdeckungen (3, 4) der beiden Stirnseiten des Druckbehälters (1) angrenzt.

4. Druckbehälter nach Anspruch 3,
**dadurch gekennzeichnet,**
**dass** der Druckbehälter (1) eine weitgehend rechteckförmige Querschnittsfläche aufweist.

5. Druckbehälter nach Anspruch 2,
**dadurch gekennzeichnet,**
**dass** die Kammern (5, 6, 7, 8, 9) unterschiedliche Volumina aufweisen.

6. Druckbehälter nach einem der Ansprüche 1 bis 5,
**dadurch gekennzeichnet,**
**dass** eine Kammer (7) konzentrisch zur Längsachse des Druckbehälters (1) angeordnet ist.

7. Druckbehälter nach einem der Ansprüche 1 bis 6,
**dadurch gekennzeichnet,**
**dass** das Grundmodul (2) ein abgelängtes Aluminium-Strangprofil ist.

8. Druckbehälter nach einem der Ansprüche 1 bis 7,
**dadurch gekennzeichnet,**
**dass** an den stirnseitigen Abdeckungen (3, 4) Anschlüsse zur Befüllung und Entnahme der Medien angeordnet sind.

## Claims

1. Pressure vessel (1) with a vessel wall (15) with end-face covers (3, 4) secured in a pressure-tight arrangement to the vessel wall (15), and an interior bounded by the vessel wall (15) and end faces for containing liquid and/or gaseous media, the interior having a plurality of mutually independent chambers (5-9) separated by dividing walls (10-14),
**characterised in that**
the vessel wall (15) and the dividing walls (10, 11, 12, 13, 14) are designed as an integral base module (2).

2. Pressure vessel as claimed in claim 1,
**characterised in that**
the chambers (5, 6, 7, 8, 9) are disposed in a honeycomb pattern.

3. Pressure vessel as claimed in claim 2,
**characterised in that**
each of the chambers (5, 6, 7, 8, 9) is adjoined by the covers (3, 4) of the two end-faces of the pressure vessel (1).

4. Pressure vessel as claimed in claim 3,
**characterised in that**
the pressure vessel (1) has a substantially rectangular-shaped cross-sectional surface.

5. Pressure vessel as claimed in claim 1,
**characterised in that**
the chambers (5, 6, 7, 8, 9) have different volumes.

6. Pressure vessel as claimed in one of claims 1 to 5,
**characterised in that**
one chamber (7) is disposed concentrically with the longitudinal axis of the pressure vessel (1).

7. Pressure vessel as claimed in one of claims 1 to 6,
**characterised in that**
the base module (2) is an aluminium extruded profile cut into lengths.

8. Pressure vessel as claimed in one of claims 1 to 7,
**characterised in that**
connectors are provided on the end face covers (3, 4) for filling and discharging the media.

## Revendications

1. Réservoir pressurisé (1) avec une paroi de réservoir (15), avec des couvercles (3, 4) fixés de manière étanche côté frontal à la paroi de réservoir (15) et avec un espace intérieur formé par la paroi de réservoir (15) et les côtés frontaux pour la réception de milieux liquides et/ou gazeux, sachant que l'espace intérieur comporte plusieurs chambres (5-9) indépendantes les unes des autres et séparées par des parois de séparation (10-14), **caractérisé en ce que** la paroi de réservoir (15) et les parois de séparation (10, 11, 12, 13, 14) sont réalisées comme module de base (2) d'une pièce.

2. Réservoir pressurisé selon la revendication 1, **caractérisé en ce que** les chambres (5, 6, 7, 8, 9) sont réalisées en forme de nid d'abeilles.

3. Réservoir pressurisé selon la revendication 2, **caractérisé en ce que** chacune des chambres (5, 6, 7, 8, 9) est adjacente aux couvercles (3, 4) des deux côtés frontaux du réservoir pressurisé (1).

4. Réservoir pressurisé selon la revendication 3, **caractérisé en ce que** le réservoir pressurisé (1) comporte une superficie de section en grande partie rectangulaire.

5. Réservoir pressurisé selon la revendication 2, **caractérisé en ce que** les chambres (5, 6, 7, 8, 9) comportent des volumes différents.

6. Réservoir pressurisé selon l'une des revendications 1 à 5, **caractérisé en ce qu'**une chambre (7) est disposée de manière concentrique par rapport à l'axe longitudinal du réservoir pressurisé (1).

7. Réservoir pressurisé selon l'une des revendications 1 à 6, **caractérisé en ce que** le module de base (2) est un profil en aluminium extrudé et tronçonné.

8. Réservoir pressurisé selon l'une des revendications 1 à 7, **caractérisé en ce que** des raccords sont disposés aux couvercles frontaux (3, 4) en vue du remplissage et du prélèvement des milieux.
